# EUROPEAN PATENT SPECIFICATION

(11) **EP 1 828 879 B1**
(45) Date of publication and mention of the grant of the patent: **25.11.2009**
(21) Application number: 04813312.8
(22) Date of filing: 06.12.2004
(51) Int. Cl.: G06F 3/06

(54) **STORAGE CONSOLIDATION PLATFORM**
SPEICHERKONSOLIDIERUNGS-PLATTFORM
PLATE-FORME DE CONSOLIDATION DE MISE EN MEMOIRE

(43) Date of publication of application: 05.09.2007
(73) Proprietor: GRESHAM ENTERPRISE STORAGE INC., Austin TX 78752-3742 (US)
(72) Inventor: PURCHASE, Stephen W., Warsash, Southampton SO31 9ZA (GB); ALDRICH, Kipp A., Austin, Texas 78752-3742 (US); SUMMERS, Keith N., Austin, Texas 78752-3742 (US); LINTON, Jeremy R., Austin, Texas 78752-3742 (US); WRIGHT, Tom R., Austin, Texas 78752-3742 (US)
(74) Representative: Davies, Simon Robert
(86) International application number: PCT/US2004/040981
(87) International publication number: WO 2006/062513

(56) References cited:
- WO-A-2004/044783
- US-A1- 2002 144 048
- US-B1- 6 209 023

## Description

### Field of the Invention

The present invention relates to computer systems, and in particular to a disk-to-tape storage system which may be used for data backup, data archiving, and so on.

### Background of the Invention

In many circumstances it is desirable to maintain a backup or archive copy of data from a computer system. For example, if a fault develops with a particular system that deletes or overwrites data or otherwise makes the data inaccessible, such a hardware failure on a disk drive or a malicious virus, etc, a backup copy of the data can be used to restore the operational system to its correct state. A backup system can also be used to ensure that important data is not lost should the operational system suffer from damage, such as through an earthquake, flooding, fire, and so on.

Another motivation for backup reflects the ever-increasing amount of data that is stored on computer systems. For example, users accumulate growing amounts of email, and businesses generate huge volumes of data and documents, many of which exist only in soft copy form. It can be very expensive to maintain all this data on primary storage at a client and/or server. Nevertheless, in some industries, there can be a statutory duty to maintain information for a set time period, especially within the financial and pharmaceutical industries, while other industries may have their own business reasons for data retention. Accordingly, data may be moved out from primary systems to backup or archive systems. Such archive systems will generally have a lower cost per unit storage than the primary systems, although the time to retrieve data from such an archive system may be relatively large. The use of backup and archive systems is described in: "Storage Networks" by Daniel Worden, 2004, Apress, Springer-Verlag, ISBN 1-59059-298-0.

Many backup and archive systems are based on tape storage, since the cost per unit storage for tape is generally lower than for any other storage medium. Such systems may be provided by an automated library containing many tape cartridges that can be loaded and unloaded automatically by a robotic system.

In many early systems, backup and/or archiving was implemented by running a backup application on the primary system - i.e. the same system as the main application to be backed up - and a tape backup unit was directly attached to this primary system. The backup application therefore communicated directly with the local tape unit to perform the desired backup operation. Over the years, more complex configurations have been adopted, such as the development of storage area networks (SANs). These networks are dedicated to performing backup, archiving, and other such storage operations (rather than say being used for general email communications). A SAN can be used to connect multiple primary systems to a single backup storage system. This then avoids the need for a separate backup system for each primary system; rather a single set of backup facilities can be shared between multiple primary systems.

One complication with the shared or common use of a backup system is that there is a risk of contention between the various primary systems that are using the backup system for backup or archive operations. This problem is particularly acute for backup applications that expect sole use of the relevant backup system (as a leftover from when each primary system had its own dedicated backup system). One way to address such concerns is to provide storage or media management products, such as the Automated Cartridge System Library Software (ACSLS) available from StorageTek (Storage Technology Corporation). Such a media manager acts as an interface between the applications requiring backup and the available storage device(s), such as a tape library. The media manager can then be used to regulate communications in a more orderly manner between the various primary systems and the backup system.

Many applications and operating systems now include some intrinsic backup functionality, rather than requiring a separate backup application to perform this task. In some cases, this backup may be implemented using disk-to-disk backup, such as disk mirroring, rather than using tape. Nevertheless, many organisations still use tape as the (ultimate) backup storage medium, either instead of or in addition to such disk-to-disk backup. For example, the cost per unit storage of tape remains lower than for disk. In addition, the use of two different storage media can improve robustness of the backup or archive solution - e.g. a disk backup may be more vulnerable to a virus than a tape backup.

In some systems, a two-stage backup approach has been adopted, where the first stage represents a backup from disk-to-disk, and the second stage a backup from the disk-to-tape. These two stages are generally decoupled, in that they represent two separate operations. The initial disk-to-disk backup may be performed in response to an interaction between the primary application and the backup application, whereas the subsequent disk-to-tape backup is normally performed under the exclusive control of the backup operation using internal (proprietary) procedures. The primary application has no knowledge or understanding of this disk-to-tape backup stage. For example, the primary application does not know on which tape a given piece of data is stored, and the data stored on tape can generally be accessed only via the backup application.

The growing complexity of storage architectures has led to increasing problems with compatibility. For example, each media manager typically has its own interface format for receiving backup or archive data. An application or operating system that wants to utilise this media manager therefore has to support the relevant interface. In practice, many applications provide support for only one or two media managers. Accordingly, an organisation will normally select a media manager that is supported by its application(s) (or conversely will select applications that support its media manager). However, sometimes such flexibility does not exist. For example, a first organisation may acquire a second organisation, and find that the applications of the second organisation do not support the media manager that the first organisation has already installed. It will be appreciated that this lack of compatibility can therefore impact the ability of an organisation to implement a simple and cost-effective backup and archive strategy. ability of an organisation to implement a simple and cost-effective backup and archive strategy.

A further problem is that even if an application or operating system does support an interface into a particular media manager, it is frequently the case that such support is only provided at a relatively minimal level. For example, an interface to a media manager system may provide some complex commands that allow a user to extract maximum benefit and efficiency from the storage system. However, application and operating system vendors may frequently opt to support only the simplest command interface to a media manager, since they may have multiple media managers to support, and often die quality of this support is not a major factor when it comes to a customer making purchase decisions for the application or operating system. Unfortunately, using this simple command interface may seriously degrade the performance of the media manager, compared to what could be achieved by using the more complex interface.

WO 2004/044783 discloses a media library controller that can communicate with multiple physical libraries that are physically separate from one another. The media library controller maintains a virtualised aggregate media library representing the physical media libraries. The media library controller establishes a virtual media library and associates a host with the virtual media library.

US 6209023 discloses a method of virtualizing SCSI semantics onto a non-SCSI transport medium. The network includes a plurality of hosts or initiators, a SCSI bus coupled to a plurality of SCSI devices, and a bridge having a non-SCSI front end coupled to the non-SCSI transport medium and a SCSI back end coupled to the SCSI bus. The bridge provides firmware for virtualizing SCSI semantics.

US 2002/144048 discloses a digital data storage unit, such as tape library, having a multiplicity of storage media slots, each storage media slot for receiving a storage media unit, a plurality of storage media units loaded in the storage media slots, a plurality of data transfer devices for writing data to and reading data from the storage media units, a plurality of data transfer device interfaces corresponding to the plurality of the data transfer devices, each data transfer device interface being configured for transferring data between a corresponding data transfer device and a host computing environment, a loader mechanism for selectively moving a storage media unit between a storage media slot and one of the data storage drives, and a storage unit controller connected to the loader mechanism and to the data transfer device interfaces.

### Summary of the Invention

The invention is defined in the appended claims.
One embodiment of the invention provides a disk-to-tape storage system comprising a front-end portion and a back-end portion. The front-end portion has a first interface for receiving storage commands and data over a network from an application performing a backup or archive operation. The received storage commands conform to a standardised command format. The back-end portion has a second interface for transmitting storage commands and the received data for storage in a tape library. The disk-to-tape storage system is operable to transform the received storage commands from the standardised command format into an appropriate format for the transmitted storage commands while still maintaining direct accessibility by the application of the received data as stored in the tape library.

The support for a standardised command format, such as SCSI (or iSCSI), allows the disk-to-tape storage system to interact with the vast majority of available backup applications and functions, which all tend to support SCSI as a form of lowest common denominator. However, because the disk-to-tape storage system does not represent a real storage device itself (e.g. it is not a real SCSI device), but only emulates the behaviour of such a system, it avoids exposing the application to problems associated with real devices, such as contention for access to a physical device between different applications.

Although the emulation of real storage devices is already provided by existing disk-to-disk backup systems (virtual tape systems), these systems do not generally provide tape backup, or if they do, the manner in which such tape backup is performed is proprietary to the application, and decoupled from the disk-to-disk backup. As a result, the application itself is unable to access any data backed up onto tape. Rather such data can only be accessed by the disk-to-disk backup system, and then made available to the application. The application is therefore locked in to the disk-to-disk backup system.

In contrast, the tape backup phase maintains direct accessibility by the application of the data as stored in the tape library. In one particular embodiment, this is achieved by preserving volume information between the received storage commands from the application and the transmitted storage commands. In other words, if the application tries to write data to a given tape, then the disk-to-tape storage system ensures that the data is written onto a tape having an identity specified by the application. (N.B. It will be appreciated that the tape is not actually mounted on the physical device that the application thinks, but this does not impact subsequent retrieval). One benefit of this is that it ensures that data is allocated to various tapes in a manner that makes sense to the application (which understands the data), rather than according to the needs of the tape backup system itself. In addition, if the application subsequently needs to access a particular data item, it knows the identity of the tape on which this data item is stored. The application is therefore able to access the data item directly through the relevant tape library if so desired, rather than being reliant upon the tape backup system as an intermediary. This is particularly useful for archive systems, in which data may have to be retrieved from tape many years after the creation of the tape, when the tape backup system originally employed may no longer be extant.

As mentioned above, existing disk-to-disk backup systems with tape support generally decouple the tape storage from the disk storage. In contrast, in accordance with one embodiment of the present invention, at least some of the transmitted storage commands have a direct correspondence to the received storage commands. Thus when an application sends a command to write data to tape, this may lead directly to the data being sent for storage to the tape library, subject to the general operational requirements of the system (e.g. caching, resolving conflict between different accesses to the same device, etc). As a result, although the application is interacting directly only with the front-end portion, the operations of the back-end portion are closely coupled to this interaction. The application is therefore still reasonably aware of when data has indeed been stored onto tape (which may in turn have a bearing on the operations of the application itself).

Note that in some circumstances, the disk-to-tape storage system may be configured to do some transformation on the received data between receipt from the application and storage into the tape library - e.g. compression, or re-formatting. Although this may make it difficult for the original application to access the data stored in the tape library directly without using the disk-to-tape storage system as an intermediary, there may be other benefits or motivations for such an approach. For example, an organisation may backup data from many different applications, and the disk-to-tape storage system can then be used to convert the data from a format particular to any given application to a standardised format determined by the organisation. The organisation may then have separate facilities to access tapes having this standardised format (which may or may not involve going through the disk-to-tape storage system).

One embodiment of the disk-to-tape storage system includes an internal media manager, which can send storage commands to the tape library via the second interface. The disk-to-tape storage system may also include a media manager interface that interacts with an external media manager, which in turn acts as an intermediary between the disk-to-tape storage system and the tape library. It will be appreciated that the disk-to-tape storage system may be connected directly (i.e. without an external media manager) and/or indirectly (i.e. with an external media storage system may be connected directly (i.e. without an external media manager) and/or indirectly (i.e. with an external media manager) to multiple different tape libraries or archives. It will also be appreciated that the tape library may itself be implemented as some form of virtual tape system (i.e. emulated by disk), although this will be transparent to the disk-to-tape storage system.

The disk-to-tape storage system includes one or more virtual devices. The virtual devices are responsive to storage commands received from the application to provide an emulated response to the application in accordance with the standardised command format. For example, if the application sends a SCSI command to the system, then the virtual device return the appropriate SCSI response. The virtual devices are also responsive to the incoming storage commands from the application to initiate said transmitted storage commands directed to the real devices. In one particular implementation, the virtual devices include at least one virtual tape drive and at least one virtual medium changer.

In one embodiment, the system includes a database, which can be used to maintain the state of the virtual devices. The database can also be used to hold information describing the operation of certain types of devices. The virtual devices can then be created and operated based on this information.

In one embodiment, the disk-to-tape storage system further includes a stored set of business rules, which are used to translate high-level storage commands received from an application into a standardised command format. This can help to simplify use of the disk-to-tape storage system by applications, in that the backup functionality does not necessarily need to be written directly in accordance with the standardised command format (which may be relatively low level). Rather, the application may use high-level storage commands for communicating with the disk-to-tape storage system, with the disk-to-tape storage system then being responsible itself to perform the conversion into the corresponding commands in SCSI or such-like.

In one particular implementation, the disk-to-tape storage system operates as a SCSI to media manager interface, and is located between storage initiators (such as a backup application) and real devices. The disk-to-tape storage system achieves backup independence by emulating SCSI devices, and also by managing a known set of physical SCSI resources. The disk-to-tape system therefore encapsulates knowledge of back-end tape drives, medium changers and volumes, and so allows any backup application that can control a SCSI device to utilise a proprietary media manager or tape library without the backup application having to know anything about that particular media manager or tape library. This is particularly suited to providing a consolidated storage platform within an enterprise storage environment.

The invention also provides method and computer program embodiments corresponding to the system. It will be appreciated that such computer program and method embodiments may utilise and benefit from the same particular features as described above in relation to the method embodiment.

Note that a computer program product may be provided as a set of computer program instructions recorded onto a physical medium, such as a CD, a DVD, and so on, or encoded into a transmission medium on a wireless or wired network such as the Internet. In either case, such instructions can then be loaded into a computer system for execution.

### Brief Description of the Drawings

One or more embodiments of the invention will now be described in detail by way of example only with reference to the following drawings:
Figure 1 is a schematic diagram showing the environment of a disk-to-tape storage system in accordance with one embodiment of the invention;
Figure 1A is a schematic diagram showing the command flow to and from the disk-to-tape storage system of Figure 1 in accordance with one embodiment of the invention;
Figure 2 is a schematic diagram showing the main components of the disk-to-tape storage system of Figure 1 in accordance with one embodiment of the invention;
Figure 3 is a schematic diagram showing the main components within the SQL database from the disk-to-tape storage system of Figure 2 in accordance with one embodiment of the invention;
Figure 4 is a schematic flowchart showing the configuration phase of the disk-to-tape storage system of Figure 2 in accordance with one embodiment of the invention; and

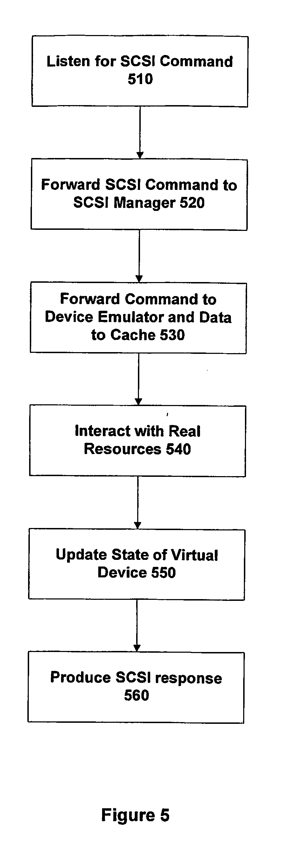

Figure 5 is a schematic flowchart showing the operational phase of the disk-to-tape storage system of Figure 2 in accordance with one embodiment of the invention.

### Detailed Description

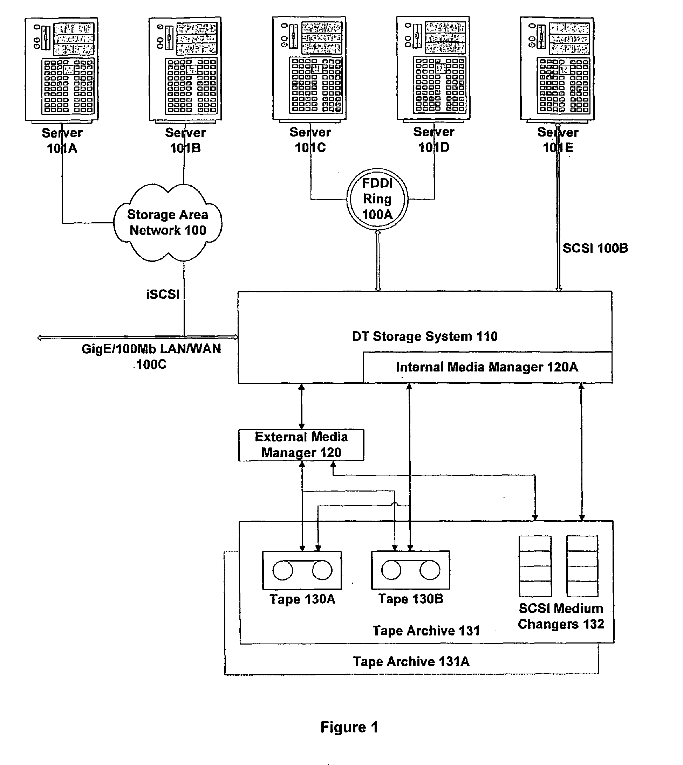

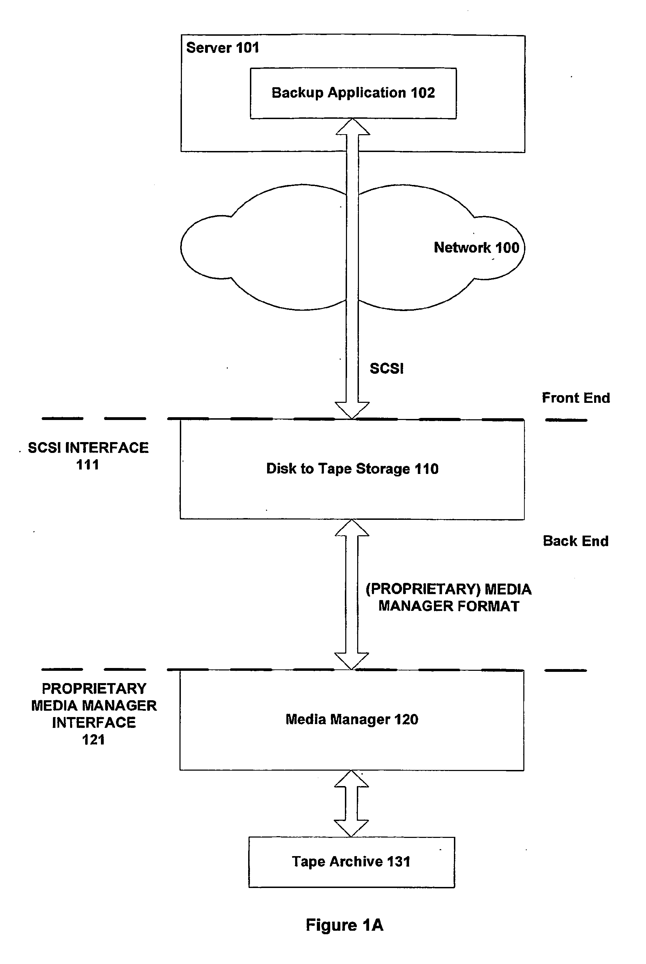

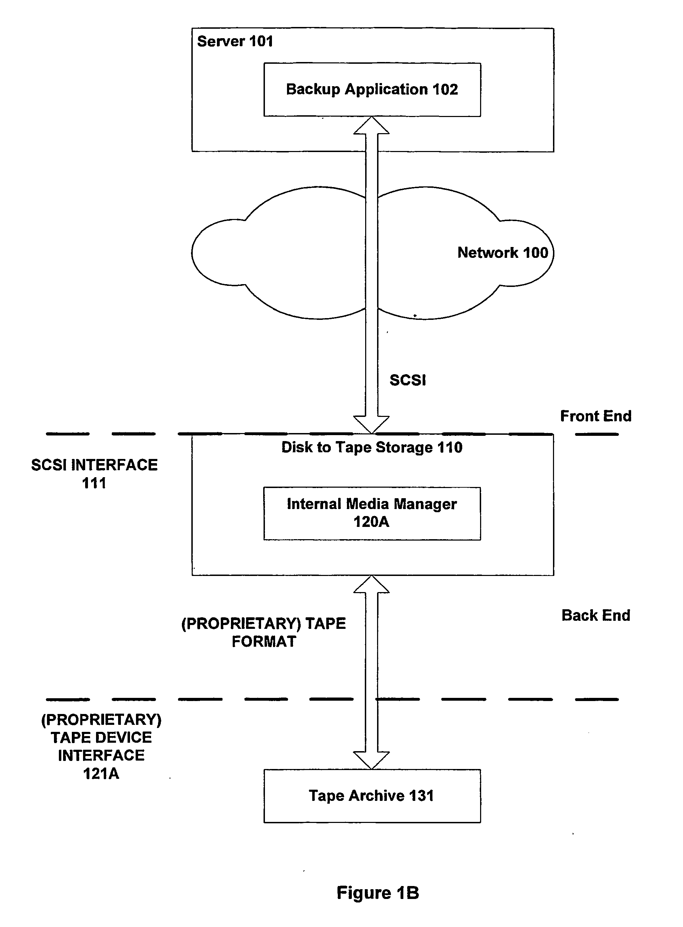

Figure 1 illustrates a disk-to-tape storage system 110 and its environment in accordance with one embodiment of the invention. The disk-to-tape storage system 110 provides archive services for a range of servers 101A, 101B, 101C, 101D, 101E. The servers 101 are assumed to represent the primary systems running applications that require backup or archiving of data by the disk-to-tape storage system 110.

Servers 101A, 101B, 101C, 101D, 101E communicate with disk-to-tape system 110 via a variety of connections. In particular, servers 101A and 101B communicate with disk-to-tape storage system 110 via storage area network (SAN) 100 and Gigabit Ethernet 100C; servers 101C and 101D communicate with disk-to-tape storage system 110 via FDDI ring 100A; and server 100E communicates with disk-to-tape storage system 110 via SCSI link 100B. It will be appreciated that the particular configuration of servers 101 and network connections shown in Figure 1 is by way of illustration only, and many other configurations may be supported by disk-to-tape storage system 110. For example, there may be more or fewer servers than shown in Figure 1, allocated as appropriate across the different network connections, and other forms of connection between the servers 101 and the disk-to-tape storage system 110 may also be supported, apart from those shown in Figure 1. In addition, disk-to-tape storage system 110 may provide backup storage for machines other than servers 101, such as clients attached to computer networks, and so on.

The disk-to tape-storage system 110 is linked to a tape archive 131, which may include a plurality of tape units 130A, 130B plus one or more SCSI medium changers 132. In some configurations an external media manager 120 may be present as an intermediary between disk-to-tape storage system 110 and tape archive 131, while in other cases the disk-to-tape storage system 110 may use its own internal media manager 120A for communications with the tape archive 131. In this latter case, disk-to-tape storage system 110 interacts directly with tape archive 131, without using media manager 120 as an intermediary. In operation, disk-to-tape storage system 110 therefore forwards data received from servers 101 for storage into tape archive 131.

Again it will be appreciated that the particular configuration shown Figure 1 is for of illustration only, and that many other configurations may be employed with disk-to-tape storage system 110. For example, there may be more than one tape library or archive 131 supported by disk-to-tape storage system 110 for storing backup data from servers 101 (such an additional tape archive is indicated schematically by tape archive 131A in Figure 1). Furthermore, although Figure 1 illustrates two tape units 130A, 130B and two medium changers, it will be appreciated that any number of tape devices and medium changers may be used, depending upon the particular storage requirements of the primary systems being supported.

In some configurations, one or more of the tape units 130A, 130B may be replaced or implemented by a virtual tape system (VTS), in which a disk storage unit emulates the behaviour of a tape unit. In other words, the VTS stores the data onto disk, but responds (e.g. in terms of SCSI messages) as if it were saving the data onto tape. In the present context, such a virtual tape system will be regarded as a form of tape unit, since it appears as such from the perspective of the disk-to-tape storage system 110.

Figure 1A is a schematic diagram illustrating command and data communications for performing backup and archive operations in the environment of Figure 1 in accordance with one embodiment of the invention. Server 101 is assumed to run at least one backup application 102. Note that backup application 102 may comprise a specialised backup application that provides backup services to other programs running on server 101 (or other linked machines), or it may represent an application or operating system that incorporates its own backup functionality.

The backup application 102 communicates with the disk -to-tape storage system 110 using a standardised protocol. In one embodiment of the invention, this standardised protocol comprises the small computer system interface (SCSI) protocol. Note that the precise version of SCSI used depends upon the particular network that connects server 101 to the disk-to-tape storage system 110. For example, if a fibre channel network is used to connect a server 101 to the disk-to-tape storage system 110, then conventional SCSI can be used, whereas if an Ethernet 101C is used for this connection, then the TCP/IP based iSCSI protocol may be used.

Figure 1A further illustrates that communications between disk-to-tape storage system 110 and media manager 120 use a format or protocol dependent upon the particular media manager 120. In general, this format will conform to some proprietary interface defined by the manufacture of media manager 120. Disk-to-tape storage system 110 therefore acts as an intermediary between server 101 and media manager 120, in that it allows server 101, and more especially application 102, to utilise a standardised protocol, namely SCSI, for performing backup and archive operations in conjunction with tape archive 131. It will be appreciated that in practice SCSI is supported at some level by all applications that can perform storage operations, and hence all applications 102 are expected to be able to interact with the disk-to-tape storage 110 using the SCSI protocol, irrespective of whether such applications also support any proprietary media manager protocols.

The disk-to-tape storage unit 110 in turn interacts with external media manager 120 using the proprietary media manager interface for that particular external media manager unit 120. Disk-to-tape storage unit 110 is designed to support a range of media manager interfaces, and to exploit such interfaces as effectively as possible. This is to be contrasted with many applications 102, which even if they support a particular media manager interface, may only support a limited subset of the interface, and therefore fail to obtain the full performance available from the interface.

The front end of disk-to-tape storage system 110 therefore provides connectivity to various backup applications 102 via appropriate system connections (e.g. SAN 100, FDDI network 100A). The back end components external to the disk-to-tape system 110 are those resources available for use by the disk-to-tape storage system 110 (such as tape archive 131).

It will be appreciated that the architecture of Figure 1A allows support for a given media manager 120 to be concentrated into a single system, namely disk-to-tape storage system 110, rather than having such support incorporated separately into many different applications 102. Hence it is generally easier and more cost-effective for disk-to-tape storage system 110 to support a range of media manager interfaces, and to support them well, rather than to provide such support in application 102.

Accordingly, interposing disk-to-tape storage system 110 between server 101 and tape archive 131 enhances the interconnectivity between application 102 and tape archive 131, since assuming that application 102 supports SCSI, application 102 can now interoperate with any tape archive 131 supported by disk-to-tape storage system 110. Furthermore, efficiency and performance can be improved through the ability of disk-to-tape storage system 110 to exploit the proprietary interface of media manager 120 in an efficient manner.

In some implementations, disk-to-tape storage system 110 can be regarded as a high-speed cache between media-managed libraries (such as tape archive 131) and related backup applications 102. The disk-to-tape storage system 110 can emulate SCSI medium changers and tape drives on the front end (the part of the disk-to tape storage system visible to any back application), while operating and maintaining one or more external media-managers 120 and/or direct-connect SCSI medium changers 132 or tape drives 130A, 130B on the back-end (which then comprise the physical resources available for use by the disk-to-tape storage system).

Figure 1B illustrates the backup data flow in a configuration where no external media manager 120 is present. In this situation, operations are generally the same as described above in relation to Figure 1A, except that disk-to-tape storage system 110 can be regarded as providing its own internal media manager functionality 120A. The internal media manager 120A communicates directly and in a suitable format (which may be proprietary) with tape archive 131 to backup data from application 102.

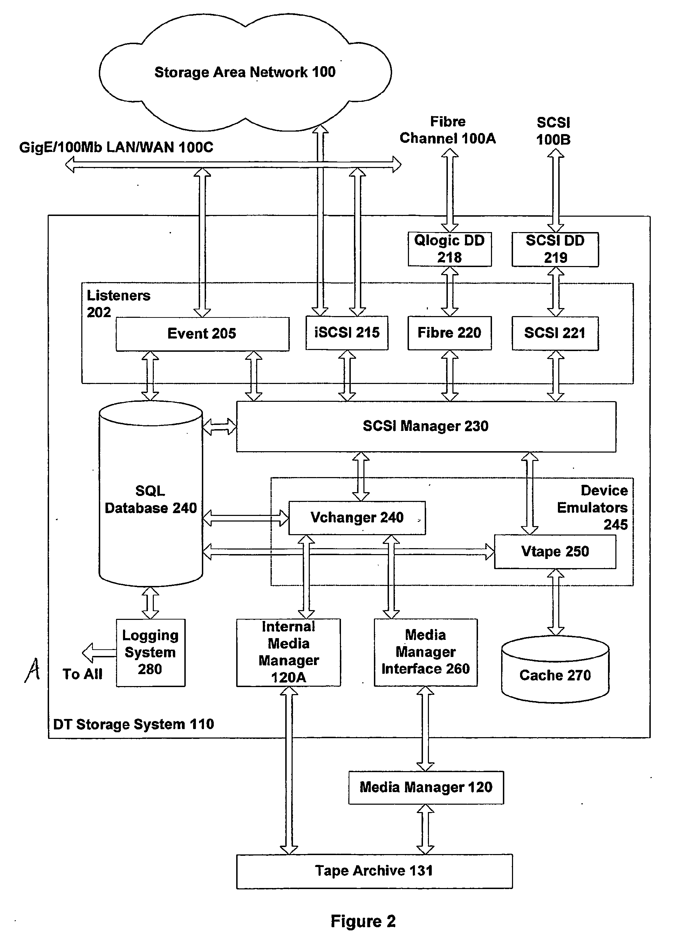

Figure 2 illustrates some of the components of disk-to-tape storage system 110 in more detail, along with the connections to SAN 100 and media manager 120 (the other components from the configuration of Figure 1 are omitted for clarity). In one embodiment, the disk-to-tape storage system is implemented as a standalone embedded system running on the Linux platform. A standard single or dual-processor motherboard is couple with suitable network interfaces (such as SCSI or fibre channel. To externally connected SCSI initiators, the disk-to-tape storage system 110 operates just as an emulated physical device would - external applications are unable to differentiate between a physical device and a device as emulated by the disk-to-tape storage system 110

In one implementation, the disk-to-tape storage system 110 comprises modular software objects and processes that utilise a standard database (such as an SQL database) to provide a central repository for system and device status and state. In one particular implementation, the disk-to-tape storage system executes as several daemon processes and threads, continually watching for and executing inbound SCSI commands, while maintaining status and state information for all the available resources within the database.

Considering the components of the disk-to-tape storage system 110 in more detail in accordance with one particular embodiment of the invention, these include an SQL database 240; various listeners 202; a SCSI manager 230; various device emulators 245; a cache 270; a media manager interface 260; and a logging system 280. These components support the use of virtual device objects and an event mechanism that allow disk-to-tape storage system 110 to act as an intermediary between primary systems 101 and media manager 120 or tape archive 131 (if no external media manager is present). The main components of disk-to-tape storage system 110 will now be described in more detail.

**SQL Database 240 -** SQL database provides standard SQL database functionality for disk-to-tape storage system 110. The SQL database 240 may be local or remote to the rest of the disk to tape system. In addition, the SQL database may be used by just one instance of the disk-to-tape storage system 110, or it may be shared (globally) by any, or all, instances of the disk-to-tape storage system 110 in a given environment. Note that in other embodiments, this functionality might be implemented by any suitable form of database, not necessarily an SQL database (for example, some form of object-oriented database).

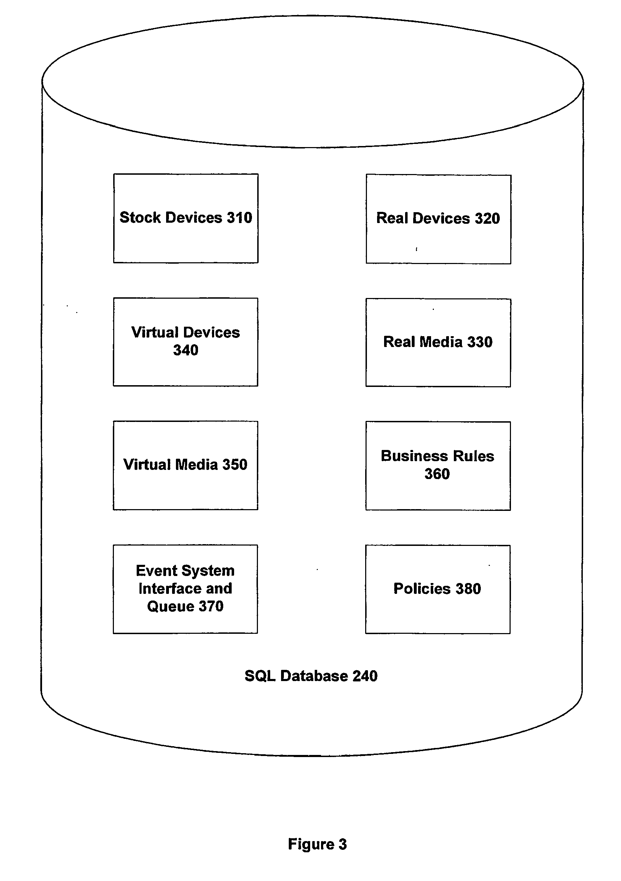

The SQL database 240 provides real and emulated device and media characteristics, shared state information, business rules, and administrative information and data mining (history, predictive analysis, and usage logging, as examples). The major database entities (as shown in Figure 3) are:
**Stock Devices 310:** stock devices are those devices available for emulation. SQL database 240 maintains stock device tables that provide details of known SCSI devices. The stock device details are based upon manufacturer documentation and observed real device behavior (which often differ). The stock device details are shipped with the disk-to-tape storage system 110.
**Real Devices 320:** real devices are those devices that are discovered and made available in a customer's environment. SQL database 240 maintains real device tables that provide a view of the customer's physical SCSI devices which are available to the back-end of the disk-to-tape storage system 110 (e.g. via media manager 120). The available devices are assigned by a policy as specified by the customer. The real device database tables are populated at initial start-up, and periodically updated during operation of the disk-to-tape storage system.
**Real Media 330:** real media database tables are populated at system commissioning, and periodically thereafter. They provide a view of available and in-use media discovered within a customer's real devices, such as tape systems 130A, 130B, including state information.
**Virtual Devices 340:** virtual device tables contain the operational state and device specific details for devices that are being emulated by disk-to-tape storage system 110. The virtual device tables relate to the stock device tables and are populated from stock device data. Once instantiated, a virtual device 340 emulates the stock device 310 that the virtual device was based upon.
**Virtual Media 350:** virtual media tables are used to store information representing the metadata and state of (emulated) media available for use in the tape drives 130 and medium changers 132 of the virtual devices 340.
**Business Rules 360:** the business rules tables contain "executable" instructions for the SQL database 240, wrapping database transactions in a higher-level command set. The business rules tables provide programming simplicity by allowing developers using the disk-to-tape storage system 110 to be independent from SQL syntax in module coding, and by providing a standard database access methodology. The business rules tables 360 in the SQL database 240 provide a simple, string-based interface to the functionality of the disk-to-tape storage system 110.
**Event System Interface and Queue 370:** common database tools, scripts, and GUIs may all use the event mechanism to control and interrogate the disk-to-tape storage system. Commands such as "mount volume", "change log level", or "add new virtual device" may be deposited in the events queue, and disk-to-tape storage system 110 will find these commands and execute them. The use of SQL database 240 for the event system interface and queue helps to provide user access control, high-availability and fail-over capabilities, and also allows operation and administration via conventional database software tools.
**Policies 380:** the policies tables and method allow for the customisation of the behaviour of the disk-to-tape storage system 110, whereby specific needs and options for a given customer can be supported (e.g. such as which real devices are available for use by the disk-to-tape storage system 110 at a given installation).
**Listeners 202 -** the disk-to-tape storage system 110 utilises listeners 202 to receive SCSI commands via standard SCSI, iSCSI (LAN), and fibre channel interfaces. It will be appreciated that the particular listener(s) utilised in any given configuration depends on the nature of network that links disk-to-tape storage system 110 with servers 101 or other data sources. Listeners 202 interact with the operating system drivers of disk-to-tape system 110 to provide device-specific control of SCSI control and data. Four listeners are provided in the particular embodiment of Figure 2:
**QLogic Fibre Channel Listener 220:** this listener supplies fibre channel connectivity for the disk-to-tape storage system 110, and in one embodiment is responsible for transacting with the QLogic family of HBA PCI cards (available from QLogic Corporation - see www.qlogic.com). The fibre channel listener 220 interacts with a fibre channel network via the QLogic target device driver 218.
**SCSI Listener 221:** the disk-to-tape storage system 110 allows a server 101 to connect directly to the disk-to-tape storage system via a conventional parallel SCSI connector 100B. Support for this SCSI connection is provided by a SCSI device driver 219 and the SCSI listener 221.
**iSCSI LAN Listener 215:** the iSCSI listener is responsible for listening for SCSI commands from an iSCSI initiator across network 100C, and allows for low cost connectivity to the disk-to-tape storage system 110 from any LAN-enabled server 100 or other system. (SCSI commands may be transacted via iSCSI without needing a traditional SCSI or fibre channel interface).
**Events Listener 205:** the events listener 205 is a special listener for supporting the event mechanism within the disk-to-tape storage system 110. The events listener 205 listens only to the events table 370 in SQL database 240 in order to interface the database-driven events system to the rest of the disk-to-tape storage system 110. A periodic check of the events table 370 reveals new events to be processed.

The combination of event listener 205 and event system interface and queue table 370 in SQL database 240 allows disk-to-tape storage system 110 to support an event system that enables functionality within the disk-to-tape storage system 110 to be triggered externally via standard SQL database tools. Events such as "change log level", "mount tape", and many others are supported. Via the events system, users and applications may initiate certain disk-to-tape storage functions without having to operate as SCSI initiators. The events system also allows for all processes within the disk-to-tape storage system 110 to communicate with one other. In addition, remote instances of the disk-to-tape storage system 110 may communicate with each other via the events system. The list of possible events is registered in events table 370 in the SQL database 240, and is extensible.

**SCSI Manager 230 -** the SCSI manager 230 is a software object that launches and maintains any number of emulated device objects, such as a virtual tape drives or virtual medium changers. The SCSI manager limits the amount of coding necessary to implement emulated devices by incorporating base functionality in a single software object. An object for a newly emulated device only needs to be constructed to handle the specific SCSI needs of the device. The SCSI manager 230 handles two basic virtual SCSI object types (though many different types are possible), namely Vchanger 240 and Vtape 250.

**Device Emulators 245 -** a device emulator object contains specific knowledge of the behaviour of an emulated device. Device emulator objects 245 are created and managed by the SCSI manager 230. General device type emulation comes from base-class definitions, such as the Virtual Tape (Vtape) class 250 and the Virtual Changer (Vchanger) class 240. Specific device objects (not shown in Figure 2) can then be implemented based on these generic device types. In one particular embodiment, the following specific device emulators are available:
- StorageTek L700 medium changer
- IBM LTO series tape drives
- Quantum DLT 4000/7000 tape drives

**Command Interpreters -** the command interpreters in the disk-to-tape storage system 110 process incoming SCSI commands as received over network 100. The command interpreters are therefore the jumping-off point for command execution within the disk-to-tape storage system 110. The command interpreters are not specifically shown in Figure 2, but are spread across the SCSI manager 230, the Vchanger 240 and Vtape 250 general device emulators, as well as any specific device emulators.

Some SCSI commands are common to all device types, some are generalized to device types, and most are particular to a specific instance of a device type - for example, an LTO tape drive responds differently from a DLT tape drive. General SCSI commands are handled in the base-class definitions, and commands to specific device types are handled in each device emulator as appropriate.

**Logging System 280 -** the logging system in disk-to-tape storage system 110 reports all interaction, traces, and error conditions to the user and system administrators. All transactions with the disk-to-tape storage system 110 are logged and time-stamped. Logging levels may be dynamically changed, increasing or decreasing the detail level without restarting the disk-to-tape storage system daemon. Logging support includes email notification of critical events.

**Cache 270 -** cache 270 provides an intermediate transfer buffer for SCSI data, and offers a significant performance advantage over conventional SCSI tape devices. Data travelling to/from a SCSI initiator via the disk-to-tape storage system 110 utilises cache 270 where possible, and the resulting performance gains when reading or writing cache can be significant. A policy driven mechanism allows for parametric control of cache behaviour. The policies controlling cache behaviour determine events and actions regarding when and where to send data.

Additional advantages of cache 270 include flexible data manipulation and management. As data are transferred, in-path changes can be executed to allow for format conversions, both in the data itself (e.g. compression), and also in the metadata within the data stream (e.g. header format conversions, date changes). Passing the data via cache 270 also enables improved management of the data flow in accordance with the cache control policies.

**Media Manager Interface 260 -** the media manager interface 260 is used to connect the back-end of the disk-to-tape storage system 110 to external SCSI medium changers or tape drives, via media manager 120. The media manager interface 260 tracks tapes and volumes in the medium changers and tape drives that are specified in SQL database 240. When disk-to-tape storage system 110 is connected to one or more external media managers 120, such as the Automated Cartridge System Library Software (ACSLS) available from Storage Technology Corporation, the Direct Attached Storage (DAS) system available from Hewlett Packard Corporation, the 3494 automated tape library available from IBM Corporation, or systems compatible with the IEEE standard 1244 for media management systems, the disk-to-tape storage system operates with the external media manager 120 to maintain knowledge of tape and volume information. Direct control of the external media manager is achieved via the media manager interface 260.

The disk-to-tape storage system 110 also includes its own internal media manager 120A. This can be used to connect the disk-to-tape storage system 110 directly to a tape archive 131, without the intermediate services of an external media manager. In this case, the internal media manager 120A is responsible for performing the general functionality of a media manager.

Operation of the disk-to-tape storage system 110 can be divided into two main phases: configuration and normal operation. Configuration involves discovering the customer resources that are available to the disk-to-tape storage system 110, and assigning these resources as appropriate.

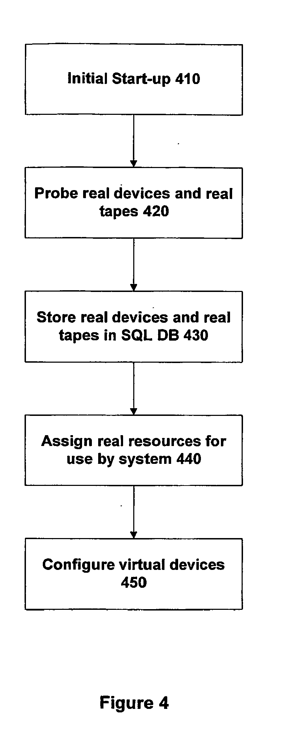

Figure 4 is a flowchart showing operations performed during configuration of the disk-to-tape storage system 110 in accordance with one embodiment of the invention. Processing commences with initial start-up of the system (410), whereupon the disk-to-tape storage system then probes the real devices and real tapes in a customer's infrastructure (420). The information from this survey is stored into the real devices table 320 and the real media table 330 of the SQL database 240 (430). An operator then assigns any or all of the real resources (i.e. real devices and/or tapes) for use by the disk-to-storage system 110 (440).

Note that the survey of real devices and tapes may be repeated periodically after start-up, in order to update the information stored in SQL database. Similarly, the assignment may be revised subsequently by performing a dynamic reconfiguration of the disk-to-tape storage system 110 (i.e. without having to stop and then restart the disk-to-tape storage system).

The virtual devices are also configured as part of startup (450). Virtual devices originate in the stock device tables 340 and are shipped extant with the disk-to-tape storage system 110. The virtual devices include medium changers and tape drives for which operational data has been compiled. Virtual devices 340 are added to the SQL database 240, and thereafter start when disk-to-tape storage system 110 is started. (It will be appreciated therefore that configuration of the virtual devices does not have to occur after configuration of the real devices, as shown in Figure 4, but may instead occur before or at the same time as configuration of the real devices).

Normal operation of the disk-to-tape storage system begins after configuration. It is assumed that the customer has configured their application(s) 102 to use the virtual SCSI connections to the disk-to-tape storage system 110, after which backup operations may proceed via disk-to-tape storage system as for any other SCSI device from the perspective of application(s) 102. The disk-to-tape storage system listens for inbound SCSI commands received over network 100 and destined for the virtual devices (510). This listening is performed by the relevant listener 202, based on the type of network 100 and communication protocol involved. Note that event listener 205 listens for an event to appear in the event queue 370 of database 240 - if such an event is detected, then the system implements the appropriate action.

Assuming that a SCSI command arrives at a front-end device driver (such as Qlogic device driver 218), this is transferred via the relevant listener to the SCSI manager (520). The SCSI manager 230 relates inbound SCSI commands by logical unit number (LUN) to the emulated virtual device and decides which object (instances of Vchanger or Vtape) to call. Commands for medium changers are routed to the Vchanger module 240, while commands for tape drives are routed to the Vtape module 250, and inbound data associated with a SCSI command is routed to the cache 270 for storage (530). Specific instances of a virtual device operate on the received SCSI command via the SCSI interpreter for that object.

The Vchanger module 240 interacts with and maintains the virtual medium changer's gripper, import/export (CAP), storage (slots), and data transport (drives) elements. When necessary, the Vchanger module interacts with a real medium changer to move real volumes about (540). Similarly, the Vtape module 250 interacts with and maintains state and status information for the virtual tape drive (550), and also redirects data to the cache module. Multiple virtual tape drives allow simultaneous data transfers. Inbound commands are handled with each instance of a virtual tape drive. Inbound data is cached and a policy-driven cache operation allows a variety of cache management techniques. For example, customers may set cache policy, such as retention time as part of policies 380. Return status information and data may be sent along the reverse path from the SCSI manager 230 back out via the appropriate device driver and back to the initiator (560).

The disk-to-tape storage system 110 may therefore be used by any backup application 102 that can control SCSI controlled medium changers and tape drives. Applications can be configured for use with disk-to-tape storage system 110, after which backup and archive operations may proceed via disk-to-tape storage system 110 as with any other SCSI device. Operational history and administrative tools such as logging system 280 allow access to performance and status information from the SQL database, and policy-based logging and history mechanisms support for various operational needs.

In conclusion, although a variety of particular embodiments have been described in detail herein, it will be appreciated that this is by way of illustration only. The skilled person will be aware of many further potential modifications and adaptations that fall within the scope of the claims and their equivalents.

## Claims

1. A disk-to-tape storage system (110) comprising:
a front-end portion having a first interface (111) for receiving storage commands and data over a network (100) from an application (102) performing a backup or archive operation, said received storage commands conforming to a standardised command format comprising a version of SCSI appropriate to said network, wherein said front-end portion includes one or more virtual devices (340) to provide SCSI device emulation,
a disk cache (270) for storing the received data, and
a back-end portion having a second interface (121) for transmitting storage commands and the received data for storage in a tape library (131),
wherein said disk-to-tape storage system is operable to route a received SCSI storage command to a virtual device for returning an appropriate emulated SCSI response to the application, and to route inbound data associated with the SCSI command to the cache for storage, and
wherein said disk-to-tape storage system is operable in response to the received storage commands in said standardised command format to retrieve the data stored in the cache for transmission to the tape library using transmitted storage commands that conform to an interface to the tape library, while maintaining direct accessibility by the application of the received data as stored in the tape library.

2. The disk-to-tape storage system of claim 1, wherein said first network interface is for attachment to a local area network (LAN) or wide area network (WAN), and said standardised command format comprises the iSCSI format.

3. The disk-to-tape storage system of any preceding claim, further comprising an internal media manager (120A), wherein said transmitted storage commands are sent from the internal media manager to the tape library via the second interface.

4. The disk-to-tape storage system of any preceding claim, further comprising a media manager interface (260), wherein said transmitted storage commands are sent from the media manager interface via the second interface to an external media manager (120) that acts as an intermediary between the disk-to-tape storage system and the tape library.

5. The disk-to-tape system of any preceding claim, wherein the direct accessibility by the application of the received data as stored in the tape library is maintained by preserving volume information between the received storage commands and the transmitted storage commands.

6. The disk-to-tape storage system of any preceding claim, wherein said virtual devices are responsive to storage commands received from the application to provide an emulated response to the application in accordance with said standardised command format.

7. The disk-to-tape storage system of claim 6, wherein at least one of said one or more virtual devices represents a tape drive.

8. The disk-to-tape storage system of claim 6, wherein at least one of said one or more virtual devices represents a medium changer.

9. The disk-to-tape storage system of any of claims 6 to 8, further comprising a database (240), wherein the state of said one or more virtual devices is maintained in said database.

10. The disk-to-tape storage system of claim 9, wherein said database further includes data describing the operation of stock devices available for emulation, and wherein said virtual devices are created based on said stock devices (310).

11. The disk-to-tape storage system of any of claims 6 to 10, wherein said one or more virtual devices are responsive to storage commands received from the application to initiate said transmitted storage commands directed at real devices.

12. The disk-to-tape storage system of any preceding claim, further comprising a stored set of business rules (360), wherein said disk-to-tape storage system is operable to use said business rules to translate high-level storage commands received from said application into said standardised command format.

13. The disk-to-tape storage system of any preceding claim, further comprising an event queue (370) for holding said received storage commands prior to implementation of the commands.

14. The disk-to-tape storage system of any preceding claim, wherein at least some of said transmitted storage commands have a direct correspondence to said received storage commands.

15. The disk-to-tape storage system of any preceding claim, wherein at least some of said transmitted storage commands have a direct correspondence to said received storage commands.

16. A method of operating a disk-to-tape storage system comprising:
receiving data and storage commands over a network from an application performing a backup or archive operation at a first interface of a front-end portion, said received storage commands conforming to a standardised command format comprising a version of SCSI appropriate to said network;
providing one or more virtual devices for the front-end portion to emulate SCSI responses back over the network in response to the received commands;
transforming the received storage commands from said standardised command format into transmitted storage commands that conform to an interface to the tape library;
transmitting from a back-end portion having a second interface the transformed storage commands and the received data for storage in the tape library so as to maintain direct accessibility by the application of the received data as stored in the tape library; and
storing the data received from the application in a cache in the disk-to-tape storage system prior to storage in the tape library,
wherein said disk-to-tape storage system is operable to route a received SCSI storage command to a virtual device for returning an appropriate emulated SCSI response to the application, and to route inbound data associated with the SCSI command to the cache for storage.

17. A computer program for implementing the method of claim 16.

## Patentansprüche

1. Disk-to-Tape-Speichersystem (110) mit:
einem Front-End-Abschnitt mit einer ersten Schnittstelle (111) für das Empfangen von Speicherbefehlen und Daten über ein Netzwerk (100) von einer Anwendung (102), die eine Backup- oder Archivierungsoperation ausführt, wobei die empfangenen Speicherbefehle einem standardisierten Befehlsformat entsprechen, welches eine für das Netzwerk geeignete SCSI-Version aufweist, wobei der Front-End-Abschnitt eine oder mehrere virtuelle Vorrichtungen (340) aufweist, um eine Emulation einer SCSI-Vorrichtung bereitzustellen,
einem Platten-Cachespeicher (270) zum Speichern der empfangenen Daten und
einem nachgestellten Abschnitt mit einer zweiten Schnittstelle (121) für das Übermitteln von Speicherbefehlen und der empfangenen Daten zur Speicherung in einer Bandbibliothek (131),
wobei das Disk-to-Tape-Speichersystem so betreibbar ist, daß es einen empfangenen SCSI-Speicherbefehl zu einer virtuellen Vorrichtung leitet, um eine entsprechende emulierte SCSI-Antwort an die Anwendung zurückzugeben, und zu dem SCSI-Befehl gehörende eingehende Daten zur Speicherung zu dem Cachespeicher leitet, und
wobei das Disk-to-Tape-Speichersystem so betreibbar ist, daß es in Reaktion auf die empfangenen Speicherbefehle in dem standardisierten Befehlsformat die in dem Cachespeicher gespeicherten Daten abruft, um sie unter Verwendung übermittelter Speicherbefehle, die einer Schnittstelle zu der Bandbibliothek entsprechen, an die Bandbibliothek zu übermitteln, während eine direkte Verfügbarkeit auf die empfangenen Daten, wie sie in der Bandbibliothek gespeichert sind, durch die Anwendung aufrechterhalten wird.

2. Disk-to-Tape-Speichersystem nach Anspruch 1, wobei die erste Netzwerkschnittstelle für die Verknüpfung mit einem lokalen Netzwerk (Local Area Network - LAN) oder einem Fernnetzwerk (Wide Area Network - WAN) bestimmt ist und das standardisierte Befehlsformat das iSCSI-Format aufweist.

3. Disk-to-Tape-Speichersystem nach einem der vorangegangenen Ansprüche, welches weiterhin einen internen Medienverwalter (120A) aufweist, wobei die übermittelten Speicherbefehle von dem internen Medienverwalter über die zweite Schnittstelle an die Bandbibliothek gesendet werden.

4. Disk-to-Tape-Speichersystem nach einem der vorangegangenen Ansprüche, welches weiterhin eine Medienverwalterschnittstelle (260) aufweist, wobei die übermittelten Speicherbefehle von der Medienverwalterschnittstelle über die zweite Schnittstelle an einen externen Medienverwalter (120) gesendet werden, welcher als Vermittler zwischen dem Disk-to-Tape-Speichersystem und der Bandbibliothek fungiert.

5. Disk-to-Tape-Speichersystem nach einem der vorangegangenen Ansprüche, wobei die direkte Verfügbarkeit auf die empfangenen Daten, wie sie in der Bandbibliothek gespeichert sind, durch die Anwendung aufrechterhalten wird, indem Volumeninformationen zwischen den empfangenen Speicherbefehlen und den übermittelten Speicherbefehlen aufbewahrt werden.

6. Disk-to-Tape-Speichersystem nach einem der vorangegangenen Ansprüche, wobei die virtuellen Vorrichtungen auf von der Anwendung empfangene Speicherbefehle so reagieren, daß sie der Anwendung eine emulierte Antwort gemäß dem standardisierten Befehlsformat bereitstellen.

7. Disk-to-Tape-Speichersystem nach Anspruch 6, wobei wenigstens eine der einen oder mehreren virtuellen Vorrichtungen ein Bandlaufwerk darstellt.

8. Disk-to-Tape-Speichersystem nach Anspruch 6, wobei wenigstens eine der einen oder mehreren virtuellen Vorrichtungen einen Medienwechsler darstellt.

9. Disk-to-Tape-Speichersystem nach einem der Ansprüche 6 bis 8, welches weiterhin eine Datenbank (240) aufweist, wobei der Zustand der einen oder mehreren virtuellen Vorrichtungen in der Datenbank aufrechterhalten wird.

10. Disk-to-Tape-Speichersystem nach Anspruch 9, wobei die Datenbank weiterhin Daten beinhaltet, welche die Betriebsweise von Lagervorrichtungen beschreiben, die zur Emulation zur Verfügung stehen, und wobei die virtuellen Vorrichtungen auf Basis der Lagervorrichtungen (310) erzeugt werden.

11. Disk-to-Tape-Speichersystem nach einem der Ansprüche 6 bis 10, wobei die eine oder die mehreren virtuellen Vorrichtungen auf von der Anwendung empfangene Speicherbefehle so reagieren, daß sie die übermittelten, an reale Vorrichtungen adressierten Speicherbefehle initiieren.

12. Disk-to-Tape-Speichersystem nach einem der vorangegangenen Ansprüche, welches weiterhin einen gespeicherten Satz von Betriebsregeln (360) aufweist, wobei das Disk-to-Tape-Speichersystem so betreibbar ist, daß es die Betriebsregeln verwendet, um von der Anwendung empfangene Speicherbefehle in einer hohen Ebene in das standardisierte Befehlsformat zu übersetzen.

13. Disk-to-Tape-Speichersystem nach einem der vorangegangenen Ansprüche, welches weiterhin eine Ereignisschlange (370) aufweist, um die empfangenen Speicherbefehle zu halten, ehe die Befehle implementiert werden.

14. Disk-to-Tape-Speichersystem nach einem der vorangegangenen Ansprüche, wobei wenigstens einige der übermittelten Speicherbefehle eine direkte Entsprechung zu den empfangenen Speicherbefehlen besitzen.

15. Disk-to-Tape-Speichersystem nach einem der vorangegangenen Ansprüche, wobei wenigstens einige der übermittelten Speicherbefehle eine direkte Entsprechung zu den empfangenen Speicherbefehlen besitzen.

16. Verfahren zum Betreiben eines Disk-to-Tape-Speichersystems, welches umfaßt:
Empfangen von Daten und Speicherbefehlen über ein Netzwerk von einer Anwendung, die eine Backup- oder Archivierungsoperation ausführt, an einer ersten Schnittstelle eines Front-End-Abschnitts, wobei die empfangenen Speicherbefehle einem standardisierten Befehlsformat entsprechen, welches eine für das Netzwerk geeignete SCSI-Version aufweist,
Bereitstellen einer oder mehrerer virtueller Vorrichtungen für den Front-End-Abschnitt, um in Reaktion auf die empfangenen Befehle SCSI-Antworten über das Netzwerk zurück zu emulieren,
Umwandeln der empfangenen Speicherbefehle von dem standardisierten Befehlsformat in übermittelte Speicherbefehle, die einer Schnittstelle zu der Bandbibliothek entsprechen,
Übermitteln der umgewandelten Speicherbefehle und der empfangenen Daten von einem nachgestellten Abschnitt mit einer zweiten Schnittstelle zur Speicherung in der Bandbibliothek, um die direkte Verfügbarkeit auf die empfangenen Daten, wie sie in der Bandbibliothek gespeichert sind, durch die Anwendung aufrechtzuerhalten, und
Speichern der von der Anwendung empfangenen Daten in einem Cachespeicher in dem Disk-to-Tape-Speichersystem vor der Speicherung in der Bandbibliothek,
wobei das Disk-to-Tape-Speichersystem so betreibbar ist, daß es einen empfangenen SCSI-Speicherbefehl zu einer virtuellen Vorrichtung leitet, um eine geeignete emulierte SCSI-Antwort an die Anwendung zurückzugeben, und zu dem SCSI-Befehl gehörende eingehende Daten zur Speicherung zu dem Cachespeicher leitet.

17. Computerprogramm für die Implementierung des Verfahrens nach Anspruch 16.

## Revendications

1. Système de mise en mémoire de disque sur bande (110) comprenant :
une partie frontale ayant une première interface (111) pour recevoir des commandes de mise en mémoire et des données sur un réseau (100) d'une application (102) effectuant une opération de sauvegarde ou d'archivage, lesdites commandes de mise en mémoire reçues étant conformes à un format de commande standardisé comprenant une version de SCSI appropriée au dit réseau, dans lequel ladite partie frontale comprend un ou plusieurs dispositifs virtuels (340) pour fournir une émulation de dispositif SCSI,
une mémoire cache de disque (270) pour mettre en mémoire les données reçues, et
une partie arrière ayant une deuxième interface (121) pour transmettre des commandes de mise en mémoire et les données reçues pour la mise en mémoire dans une bibliothèque de bandes (131),
dans lequel ledit système de mise en mémoire de disque sur bande est utilisable pour acheminer une commande de mise en mémoire SCSI reçue vers un dispositif virtuel pour retourner une réponse SCSI émulée appropriée à l'application, et pour acheminer des données entrantes associées à la commande SCSI vers la mémoire cache pour la mise en mémoire, et
dans lequel ledit système de mise en mémoire de disque sur bande est utilisable en réponse aux commandes de mise en mémoire reçues dans ledit format de commande standardisé pour extraire les données mises en mémoire dans la mémoire cache pour la transmission à la bibliothèque de bandes en utilisant des commandes de mise en mémoire transmises conformes à une interface avec la bibliothèque de bandes, tout en maintenant l'accessibilité directe par l'application des données reçues telles qu'elles sont mises en mémoire dans la bibliothèque de bandes.

2. Système de mise en mémoire de disque sur bande selon la revendication 1, dans lequel ladite première interface de réseau est pour l'attachement à un réseau local (LAN) ou un réseau étendu (WAN), et ledit format de commande standardisé comprend le format iSCSI.

3. Système de mise en mémoire de disque sur bande selon l'une quelconque des revendications précédentes, comprenant en outre un gestionnaire de support interne (120A), dans lequel lesdites commandes de mise en mémoire transmises sont envoyées du gestionnaire de support interne à la bibliothèque de bandes par l'intermédiaire de la deuxième interface.

4. Système de mise en mémoire de disque sur bande selon l'une quelconque des revendications précédentes, comprenant en outre une interface de gestionnaire de support (260), dans lequel lesdites commandes de mise en mémoire transmises sont envoyées de l'interface de gestionnaire de support par l'intermédiaire de la deuxième interface à un gestionnaire de support externe (120) qui sert d'intermédiaire entre le système de mise en mémoire de disque sur bande et la bibliothèque de bandes.

5. Système de mise en mémoire de disque sur bande selon l'une quelconque des revendications précédentes, dans lequel l'accessibilité directe par l'application des données reçues telles qu'elles sont mises en mémoire dans la bibliothèque de bandes est maintenue en préservant les informations de volume entre les commandes de mise en mémoire reçues et les commandes de mise en mémoire transmises.

6. Système de mise en mémoire de disque sur bande selon l'une quelconque des revendications précédentes, dans lequel lesdits dispositifs virtuels sont réactifs à des commandes de mise en mémoire reçues de l'application pour fournir une réponse émulée à l'application en fonction dudit format de commande standardisé.

7. Système de mise en mémoire de disque sur bande selon la revendication 6, dans lequel au moins l'un desdits un ou plusieurs dispositifs virtuels représente un lecteur de bande.

8. Système de mise en mémoire de disque sur bande selon la revendication 6, dans lequel au moins l'un desdits un ou plusieurs dispositifs virtuels représente un changeur de support.

9. Système de mise en mémoire de disque sur bande selon l'une quelconque des revendications 6 à 8, comprenant en outre une base de données (240), dans lequel l'état desdits un ou plusieurs dispositifs virtuels est maintenu dans ladite base de données.

10. Système de mise en mémoire de disque sur bande selon la revendication 9, dans lequel ladite base de données comprend en outre des données décrivant le fonctionnement des dispositifs de mise en mémoire disponibles pour l'émulation, et dans lequel lesdits dispositifs virtuels sont créés sur la base desdits dispositifs de mise en mémoire (310).

11. Système de mise en mémoire de disque sur bande selon l'une quelconque des revendications 6 à 10, dans lequel lesdits un ou plusieurs dispositifs virtuels sont réactifs à des commandes de mise en mémoire reçues de l'application pour initier lesdites commandes de mise en mémoire transmises dirigées vers des dispositifs réels.

12. Système de mise en mémoire de disque sur bande selon l'une quelconque des revendications précédentes, comprenant en outre un ensemble mis en mémoire de règles d'activité (360), dans lequel ledit système de mise en mémoire de disque sur bande est utilisable pour utiliser lesdites règles d'activité pour convertir des commandes de mise en mémoire de niveau supérieur reçues de ladite application dans ledit format de commande standardisé.

13. Système de mise en mémoire de disque sur bande selon l'une quelconque des revendications précédentes, comprenant en outre une file d'attente d'événements (370) pour contenir lesdites commandes de mise en mémoire reçues avant la mise en oeuvre des commandes.

14. Système de mise en mémoire de disque sur bande selon l'une quelconque des revendications précédentes, dans lequel au moins certaines desdites commandes de mise en mémoire transmises ont une correspondance directe avec lesdites commandes de mise en mémoire reçues.

15. Système de mise en mémoire de disque sur bande selon l'une quelconque des revendications précédentes, dans lequel au moins certaines des commandes de mise en mémoire transmises ont une correspondance directe avec lesdites commandes de mise en mémoire reçues.

16. Procédé pour faire fonctionner un système de mise en mémoire de disque sur bande comprenant les étapes consistant à :
recevoir des commandes de mise en mémoire et des données sur un réseau d'une application effectuant une opération de sauvegarde ou d'archivage à une première interface d'une partie frontale, lesdites commandes de mise en mémoire reçues étant conformes à un format de commande standardisé comprenant une version de SCSI appropriée au dit réseau ;
fournir un ou plusieurs dispositifs virtuels pour que la partie frontale émule des réponses SCSI en retour sur le réseau en réponse aux commandes reçues,
transformer les commandes de mise en mémoire reçues dudit format de commande standardisé en commandes de mise en mémoire transmises conformes à une interface avec la bibliothèque de bandes ;
transmettre d'une partie arrière ayant une deuxième interface les commandes de mise en mémoire transformées et les données reçues pour la mise en mémoire dans la bibliothèque de bandes de manière à maintenir l'accessibilité directe par l'application des données reçues telles qu'elles sont mises en mémoire dans la bibliothèque de bandes ; et
mettre en mémoire les données reçues de l'application dans une mémoire cache dans le système de mise en mémoire de disque sur bande avant la mise en mémoire dans la bibliothèque de bandes,
dans lequel ledit système de mise en mémoire de disque sur bande est utilisable pour acheminer une commande de mise en mémoire SCSI reçue vers un dispositif virtuel pour retourner une réponse SCSI émulée appropriée à l'application, et pour acheminer des données entrantes associées à la commande SCSI vers la mémoire cache pour la mise en mémoire.

17. Programme informatique pour mettre en oeuvre le procédé de la revendication 16.
